(19) Europäisches Patentamt / European Patent Office / Office européen des brevets

(11) **EP 2 302 442 A1**

(12) **DEMANDE DE BREVET EUROPEEN**

(43) Date de publication:
**30.03.2011 Bulletin 2011/13**

(51) Int Cl.:
*G02C 7/02* <sup>(2006.01)</sup>

(21) Numéro de dépôt: **10180443.3**

(22) Date de dépôt: **21.04.2006**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.12.2005 FR 0512822**

(62) Numéro(s) de document de la (des) demande(s) initiale(s) en application de l'article 76 CBE:
**06290653.2 / 1 798 590**

(71) Demandeur: **ESSILOR INTERNATIONAL (COMPAGNIE GENERAL D'OPTIQUE) 94227 Charenton Cedex (FR)**

(72) Inventeurs:
• **Bourdoncle, Bernard 94227 Charenton Cédex (FR)**
• **Marin, Gildas 94227 Charenton Cédex (FR)**

(74) Mandataire: **Hirsch & Associés 58, avenue Marceau 75008 Paris (FR)**

Remarques:
Cette demande a été déposée le 27-09-2010 comme demande divisionnaire de la demande mentionnée sous le code INID 62.

(54) **Procédé de détermination d'une lentille ophtalmique**

(57) L'invention a pour objet un procédé de détermination par optimisation d'une lentille ophtalmique pour un porteur auquel une addition de puissance a été prescrite. Le procédé propose d'utiliser comme cible pour l'optimisation de la lentille, dans les conditions du porté, un écart entre l'orientation moyenne des axes d'astigmatisme résultant et la verticale inférieur à 2,5° dans une première zone de contrôle délimitée par une ellipse centrée sur la méridienne de progression à mi-hauteur entre la croix de montage (CM) et le point de référence en vision de près (VP), ladite ellipse présentant un grand axe supérieur à 35° et un petit axe compris entre 3,8° et 4,5°.

L'invention permet d'améliorer les performances des lentilles multifocales progressives en vision intermédiaire.

Fig. 7

EP 2 302 442 A1

## Description

La présente invention a pour objet un procédé de détermination d'une lentille ophtalmique et une lentille ophtalmique obtenue par un tel procédé.

Toute lentille ophtalmique, destinée à être portée dans une monture, est associée à une prescription. La prescription en matière ophtalmique peut comprendre une prescription de puissance, positive ou négative, ainsi qu'une prescription d'astigmatisme. Ces prescriptions correspondent à des corrections à apporter au porteur des lentilles pour corriger les défauts de sa vision. Une lentille est montée dans la monture en fonction de la prescription et de la position des yeux du porteur par rapport à la monture.

Dans les cas les plus simples, la prescription se réduit à une prescription de puissance, positive ou négative. La lentille est dite unifocale et présente une symétrie de révolution. Elle est simplement montée dans la monture de sorte que la direction principale du regard du porteur coïncide avec l'axe de symétrie de la lentille.

Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition (ou progression de puissance) représentative de l'incrément de puissance entre la vision de loin et la vision de près; ceci revient à une prescription de puissance en vision de loin et à une prescription de puissance en vision de près. Les lentilles adaptées aux porteurs presbytes sont des lentilles multifocales progressives; ces lentilles sont décrites par exemples dans FR-A-2 699 294, US-A-5 270 745 ou US-A-5 272 495, FR-A-2 683 642, FR-A-2 699 294 ou encore FR-A-2 704 327. Les lentilles ophtalmiques multifocales progressives comprennent une zone de vision de loin, une zone de vision de près, une zone de vision intermédiaire, une méridienne principale de progression traversant ces trois zones. Elles sont généralement déterminées par optimisation, à partir d'un certain nombre de contraintes imposées aux différentes caractéristiques de la lentille. Ces lentilles sont généralistes, en ce qu'elles sont adaptées aux différents besoins courants du porteur. On définit des familles de lentilles multifocales progressives, chaque lentille d'une famille étant caractérisée par une addition, qui correspond à la variation de puissance entre la zone de vision de loin et la zone de vision de près. Plus précisément, l'addition, notée A, correspond à la variation de puissance sur la méridienne entre un point VL de la zone de vision de loin et un point VP de la zone de vision de près, qui sont appelés respectivement point de référence de la vision de loin et point de référence de la vision de près, et qui représentent les points d'intersection du regard et de la surface de la lentille pour une vision à l'infini et pour une vision de lecture.

Indépendamment de la prescription de puissance et d'addition de puissance, il peut être prescrit à un porteur une correction d'astigmatisme. Une telle prescription d'astigmatisme est effectuée par l'ophtalmologiste sous la forme d'un couple formé d'une valeur d'axe (en degrés) et d'une valeur d'amplitude (en dioptries). Sur une surface, la valeur d'amplitude représente la différence entre les courbures principales; la valeur d'axe représente l'orientation, par rapport à un axe de référence et dans un sens de rotation convenu, de l'une des deux courbures suivant la convention que l'on choisit d'utiliser. En pratique, il existe deux conventions, la convention dite "cylindre négatif", dans ce cas, si $1/R_1$ est la courbure maximale et $1/R_2$ la courbure minimale, la valeur d'amplitude sera $(1/R_2 - 1/R_1)$ et l'axe sera l'orientation, par rapport à l'axe de référence, de la courbure maximale $1/R_1$, et la convention dite "cylindre positif", dans ce cas, la valeur d'amplitude sera $(1/R_1 - 1/R_2)$ et l'axe sera l'orientation, par rapport à l'axe de référence, de la courbure minimale $1/R_2$. L'axe de référence est horizontal et le sens de rotation est le sens trigonométrique direct, lorsque l'on regarde le porteur. Une valeur d'axe de +45° représente donc un axe orienté obliquement, qui lorsque l'on regarde le porteur, s'étend du quadrant situé en haut à droite jusqu'au quadrant situé en bas à gauche. En termes de prescription d'astigmatisme, la valeur d'amplitude représente la différence entre les puissances minimales et maximales dans une direction donnée et l'axe représente l'orientation de la puissance maximale si la valeur d'astigmatisme est négative (l'axe représente l'orientation de la puissance minimale si la valeur d'astigmatisme est positive). Une telle prescription d'astigmatisme est mesurée en vision de loin du porteur. Bien qu'il s'agisse d'un abus de langage, on utilise souvent le terme d'astigmatisme pour désigner l'amplitude de l'astigmatisme alors que ce terme désigne le couple amplitude/angle. Le contexte permet à l'homme du métier de comprendre quelle acception est entendue.

Par ailleurs, les lois de l'optique des tracés de rayons entraînent l'apparition de défauts optiques quand les rayons lumineux s'écartent de l'axe central de toute lentille. Ces défauts connus qui comprennent entre autres un défaut de courbure ou de puissance et un défaut d'astigmatisme peuvent être appelés de façon générique défauts d'obliquité des rayons.

L'homme de l'art sait compenser ces défauts. Par exemple, EP-A-0 990 939 propose un procédé de détermination par optimisation d'une lentille ophtalmique pour un porteur ayant une prescription d'astigmatisme. Ce document propose de choisir une lentille cible et d'utiliser une méthode de tracé de rayons et de minimiser la différence entre l'astigmatisme résiduel et l'astigmatisme de la lentille cible. L'astigmatisme résiduel est défini dans ce document comme l'écart en amplitude et en axe entre l'astigmatisme prescrit et l'astigmatisme généré par la lentille. Ce procédé permet une meilleure adaptation des lentilles aux porteurs astigmates, en évitant les aberrations optiques induites par l'ajout d'une surface torique. Le calcul s'effectue dans un repère lié à l'oeil, ce qui permet de tenir compte de l'effet de torsion de l'oeil lorsque le porteur regarde dans une direction excentrée.

Les défauts d'obliçité ont aussi été identifiés pour les lentilles multifocales progressives. Par exemple, WO-A-98 12590 décrit une méthode de détermination par optimisation d'un jeu de lentilles ophtalmiques multifocales. Ce document propose de définir le jeu de lentilles en considérant les caractéristiques optiques des lentilles et notamment la puissance porteur et l'astigmatisme oblique, dans les conditions du porté. La lentille est optimisée par tracé de rayons, à partir d'un ergorama associant à chaque direction du regard dans les conditions du porté un point objet visé. Cet ergorama fournit des cibles pour une optimisation des lentilles par tracé de rayons pour calculer la puissance porteur et l'astigmatisme résultant en chaque point de la lentille traversé par la ligne du regard.

Le défaut d'astigmatisme ou astigmatisme résultant est un défaut inhérent aux lentilles progressives ; il peut donc être considéré comme un défaut tolérable, au moins en zone périphérique de la lentille. Dans la zone de vision intermédiaire d'une lentille multifocale progressive, la largeur entre les lignes d'isoastigmatisme est essentiellement commandée par la vitesse de variation de la puissance le long de la méridienne.

Les lentilles multifocales progressives sont généralement optimisées en contrôlant la variation de puissance le long de la méridienne et en imposant un astigmatisme résultant nul sur la méridienne. En outre, la zone de vision intermédiaire est généralement optimisée en contrôlant la largeur d'une zone autour de la méridienne où le module de l'astigmatisme résultant est maintenu inférieur à une valeur estimée non perturbante.

Bien que la prescription d'astigmatisme contienne une valeur d'axe en plus du module, tels que précédemment définis, seul le module de l'astigmatisme résultant est généralement considéré dans l'optimisation d'une lentille ophtalmique progressive. L'astigmatisme résultant est le reste de la soustraction vectorielle de l'astigmatisme effectif introduit par la lentille dans les conditions du porté à l'astigmatisme prescrit au porteur. L'astigmatisme résultant présente donc un axe.

Or, il a été constaté qu'en présence d'astigmatisme, le système visuel préfère positionner la focale verticale sur la rétine, soit grâce à son accommodation restante, soit en ajustant la puissance nécessaire. Ces constatations ont été menées dans le cadre de la thèse de doctorat de C. Miège sur la fonction accommodative de l'oeil humain ou dans l'article de Charman & al., « Astigmatism, accomodation and visual intrumentation » publiée dans la revue Applied Optics, Vol 17, No 24, pp 3903-3910, 1978.

Ainsi, une lentille progressive comprenant une zone de vision intermédiaire dans laquelle l'axe d'astigmatisme est maintenu vertical répondrait au besoin physiologique de la plupart des porteurs et fournirait une impression de champ de vision plus large.

Il existe toujours un besoin d'une lentille qui satisfasse mieux les porteurs presbytes. L'invention propose de contrôler les valeurs d'axe de l'astigmatisme résultant en plus des valeurs du module de l'astigmatisme résultant sur une lentille multifocale progressive.

L'invention propose en conséquence un procédé de détermination d'une lentille ophtalmique multifocale progressive comprenant les étapes de :

- choix d'une lentille de départ présentant une croix de montage matérialisant la direction primaire du regard dans les conditions du porté et une méridienne de progression sensiblement ombilique présentant une addition de puissance supérieure ou égale à 2 dioptries entre un point de référence en vision de loin et un point de référence en vision de près ;

- définition d'une lentille courante égale à la lentille de départ ;

- optimisation, dans les conditions du porté, de la lentille courante en utilisant comme cibles :

- une longueur de progression inférieure ou égale à 25°, la longueur de progression étant définie comme l'angle d'abaissement du regard depuis la croix de montage jusqu'au point de la méridienne pour lequel la puissance optique porteur atteint 85% de la prescription d'addition ; et

- un écart entre l'orientation moyenne des axes d'astigmatisme résultant et la verticale inférieur à 2,5° dans une première zone de contrôle délimitée par une ellipse centrée sur la méridienne de progression à mi-hauteur entre la croix de montage et le point de référence en vision de près, ladite ellipse présentant un grand axe supérieur à 35° et un petit axe compris entre 3,8° et 4,5°.

Selon une caractéristique, l'étape d'optimisation du procédé utilise en outre comme cible un écart entre l'orientation moyenne des axes d'astigmatisme résultant et la verticale inférieur à 3° dans une deuxième zone de contrôle délimitée par une ellipse centrée sur la méridienne de progression à mi-hauteur entre la croix de montage et le point de référence en vision de près, ladite ellipse présentant un grand axe supérieur à 35° et un petit axe compris entre 7,5° et 8,5°.

Selon une caractéristique, l'étape d'optimisation du procédé utilise en outre comme cible un écart entre l'orientation moyenne des axes d'astigmatisme résultant et la verticale inférieur à 3,5° dans une troisième zone de contrôle délimitée par une ellipse centrée sur la méridienne de progression à mi-hauteur entre la croix de montage et le point de référence en vision de près, ladite ellipse présentant un grand axe supérieur à 35° et un petit axe compris entre 11° et 13°.

Selon une caractéristique, pour un porteur auquel une correction d'astigmatisme a été prescrite, l'optimisation de la lentille courante comprend une étape consistant à soustraire vectoriellement l'astigmatisme prescrit à l'astigmatisme générée par la lentille dans les conditions du porté.

L'invention propose aussi une lentille ophtalmique multifocale progressive présentant une surface complexe ayant :

- une croix de montage matérialisant la direction primaire du regard dans les conditions du porté ;
- une méridienne de progression sensiblement oblique présentant une addition de puissance supérieure ou égale à 2 dioptries entre un point de référence en vision de loin et un point de référence en vision de près ;

  la lentille présentant, dans les conditions du porté et ramenée à une prescription plan en vision de loin par ajustement des rayons de courbure d'au moins une de ses faces :

- une longueur de progression inférieure ou égale à 25°, la longueur de progression étant définie comme l'angle d'abaissement du regard depuis la croix de montage jusqu'au point de la méridienne pour lequel la puissance optique porteur atteint 85% de la prescription d'addition,
- un écart entre l'orientation moyenne des axes d'astigmatisme résultant et la verticale inférieur à 2,5° dans une première zone de contrôle délimitée par une ellipse centrée sur la méridienne de progression à mi-hauteur entre la croix de montage et le point de référence en vision de près, ladite ellipse présentant un grand axe supérieur à 35° et un petit axe compris entre 3,8° et 4,5°.

Selon une caractéristique, la lentille présente en outre, dans les conditions du porté et ramenée à une prescription plan en vision de loin par ajustement des rayons de courbure d'au moins une de ses faces, un écart entre l'orientation moyenne des axes d'astigmatisme résultant et la verticale inférieur à 3° dans une deuxième zone de contrôle délimitée par une ellipse centrée sur la méridienne de progression à mi-hauteur entre la croix de montage et le point de référence en vision de près, ladite ellipse présentant un grand axe compris supérieur à 35° et un petit axe compris entre 7,5° et 8,5°.

Selon une caractéristique, la lentille présente en outre, dans les conditions du porté et ramenée à une prescription plan en vision de loin par ajustement des rayons de courbure d'au moins une de ses faces, un écart entre l'orientation moyenne des axes d'astigmatisme résultant et la verticale inférieur à 3,5° dans une troisième zone de contrôle délimitée par une ellipse centrée sur la méridienne de progression à mi-hauteur entre la croix de montage et le point de référence en vision de près, ladite ellipse présentant un grand axe supérieur à 35° et un petit axe compris entre 11° et 13°.

Selon une caractéristique, le grand axe de l'ellipse délimitant la zone de contrôle de l'orientation moyenne des axes d'astigmatisme résultant est compris entre 35° et 36°.

L'invention concerne également un équipement visuel comportant au moins une lentille selon l'invention et un procédé de correction de la vision d'un sujet presbyte, comprenant la fourniture au sujet ou le port par le sujet d'un tel équipement.

D'autres avantages et caractéristiques de l'invention apparaîtront à la lecture de la description qui suit des modes de réalisation de l'invention, donnés à titre d'exemple et en référence aux dessins qui montrent:

- figure 1, un schéma d'un système optique oeil-lentille, en coupe verticale;
- figures 2 et 3, des schémas en perspective d'un système oeil-lentille;
- figure 4, un graphe de puissance optique porteur le long de la méridienne de la lentille selon un mode de réalisation de l'invention ;
- figure 5, une carte de puissance optique porteur de la lentille de la figure 4 ;
- figure 6, une carte de module d'astigmatisme résultant d'un porteur de la lentille de la figure 4 ;
- figure 7, la carte de module d'astigmatisme résultant de la figure 6 sur laquelle on a reporté une première zone de contrôle de l'axe de l'astigmatisme ;
- figure 8, la carte de module d'astigmatisme résultant de la figure 6 sur laquelle on a reporté une deuxième zone de contrôle de l'axe de l'astigmatisme ;
- figure 9, la carte de module d'astigmatisme résultant de la figure 6 sur laquelle on a reporté une troisième zone de contrôle de l'axe de l'astigmatisme.

De façon connue en soi, en tout point d'une surface asphérique, on définit une sphère moyenne D donnée par la formule:

$$D = \frac{n-1}{2}\left(\frac{1}{R_1} + \frac{1}{R_2}\right)$$

où $R_1$ et $R_2$ sont les rayons de courbure maximal et minimal exprimés en mètres, et n l'indice du matériau constituant la lentille.

On définit aussi un cylindre C, donné par la formule:

$$C = (n-1)\left|\frac{1}{R_1} - \frac{1}{R_2}\right|$$

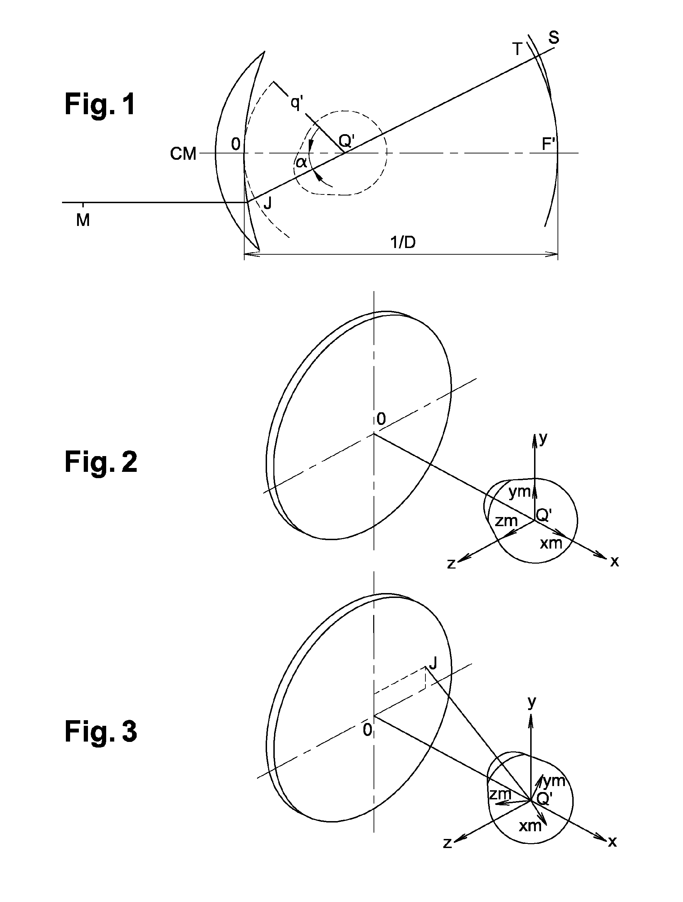

On définit pour une lentille donnée, les grandeurs optiques correspondantes, à savoir une puissance et un astigmatisme, dans les conditions du porté. La figure 1 montre un schéma d'un système optique oeil et lentille en vue de dessus, et montre les définitions utilisées dans la suite de la description. On appelle Q' le centre de rotation de l'oeil; l'axe Q'F' représenté sur la figure en traits mixtes est l'axe horizontal passant par le centre de rotation de l'oeil et s'étendant devant le porteur - autrement dit l'axe Q'F' correspond à la direction primaire du regard. Cet axe coupe, sur la face avant, un point de la lentille appelé Croix de Montage, qui est matérialisé sur les lentilles pour permettre leur positionnement par un opticien ; cette croix de montage CM permet de repérer sur la lentille la direction primaire du regard dans les conditions du porté. Soit le point O, point d'intersection de la face arrière et de cet axe Q'F'. On définit une sphère des sommets, de centre Q', et de rayon q', qui coupe la face arrière de la lentille au point O. A titre d'exemple, une valeur du rayon q' de 27 mm correspond à une valeur courante et fournit des résultats satisfaisants lors du porté des lentilles. On peut dessiner la coupe de la lentille dans le plan (O, x, y) défini en référence à la figure 2. La tangente à cette courbe au point O est inclinée par rapport à l'axe (O, y) d'un angle appelé angle pantoscopique. La valeur de l'angle pantoscopique est couramment de 8°. On peut également dessiner la coupe de la lentille dans le plan (O, x, z). La tangente à cette courbe au point O est inclinée par rapport à l'axe (O, z) d'un angle appelé galbe. La valeur du galbe est couramment de 0o.

On appelle dans la suite conditions du porté ces conditions de montage de la lentille par rapport à l'oeil, à savoir:

- une distance de 27 mm entre le centre de rotation de l'oeil et la face arrière de la lentille, sur l'axe Q'F';
- un angle pantoscopique de 8°;
- un galbe de 0°.

Ces valeurs sont celles choisies pour les exemples décrits mais elles peuvent varier pour être égales à des valeurs propres à chaque individu.

Une direction donnée du regard - représentée en traits pleins sur la figure 1 - correspond à une position de l'oeil en rotation autour de Q' et à un point J de la sphère des sommets; une direction du regard peut aussi être repérée, en coordonnées sphériques, par deux angles $\alpha$ et $\beta$. L'angle $\alpha$ est l'angle formé entre l'axe Q'F' et la projection de la droite Q'J sur le plan vertical contenant l'axe Q'F'; cet angle apparaît sur le schéma de la figure 1. L'angle $\beta$ est l'angle formé entre l'axe Q'F' et la projection de la droite Q'J sur le plan horizontal contenant l'axe Q'F'. Une direction donnée du regard correspond donc à un point J de la sphère des sommets ou à un couple $(\alpha,\beta)$.

Les figures 2 et 3 montrent des schémas en perspective d'un système oeil-lentille. La figure 2 montre la position de l'oeil et du repère lié à l'oeil, dans la direction de regard principale, $\alpha = \beta = 0$, dite direction primaire du regard. Les points J et O sont alors confondus. La figure 3 montre la position de l'oeil et du repère qui y est lié dans une direction $(\alpha, \beta)$. On a représenté sur les figures 2 et 3 un repère $\{x, y, z\}$ fixe et un repère $\{x_m, y_m, z_m\}$ lié à l'oeil, pour bien montrer la rotation de l'oeil. Le repère $\{x, y, z\}$ a pour origine le point Q'; l'axe x est l'axe Q'F' - le point F' n'étant pas représenté sur les figures 2 et 3 et passe par le point O; cet axe est orienté de la lentille vers l'oeil. Le plan $\{y, z\}$ est le plan vertical; l'axe y est vertical et orienté vers le haut; l'axe z est horizontal, le repère étant orthonormé direct. Le repère $\{x_m, y_m, z_m\}$ lié à l'oeil a comme centre le point Q'; l'axe $x_m$ est donné par la direction JQ' du regard, et coïncide avec le repère $\{x, y, z\}$ pour la direction primaire du regard. La loi de Listing donne les relations entre les repères $\{x, y, z\}$ et $\{x_m, y_m, z_m\}$ pour chaque direction du regard, voir Legrand, Optique Physiologique, tome 1, Edition de la Revue d'Optique, Paris 1965.

Dans une direction donnée du regard, l'image d'un point M de l'espace objet situé à une distance objet donnée, se forme entre deux points S et T correspondant à des distances JT et JS minimale et maximale (qui seraient des distances focales sagittales et tangentielles dans le cas de surfaces de révolution, et d'un point M à l'infini). L'angle $\gamma$, repéré comme l'axe d'astigmatisme dans la convention dite « cylindre positif », est l'angle formé par l'image correspondant à la distance la plus grande avec l'axe $(z_m)$, dans le plan $(z_m, y_m)$. défini en référence aux figures 2 et 3. L'angle $\gamma$ est mesuré dans le sens trigonométrique direct lorsque l'on regarde le porteur. Dans l'exemple de la figure, sur l'axe Q'F', l'image d'un point de l'espace objet à l'infini se forme au point F'; les points S et T sont confondus, ce qui revient à dire que la lentille est localement sphérique dans la direction primaire du regard. La distance D est la frontale arrière de la lentille.

On appelle ergorama une fonction associant à chaque direction du regard la distance habituelle du point objet. Typiquement, en vision de loin suivant la direction primaire du regard, le point objet est à l'infini. En vision de près, suivant une direction correspondant sensiblement à un angle $\alpha$ de l'ordre de 5° et à un angle $\beta$ de l'ordre de 35°, la distance objet est de l'ordre de 30 à 50 cm. Pour plus de détails sur une définition possible d'un ergorama, on pourra consulter FR-A-2 753 805 (US-A-6 318 859). Ce document décrit un ergorama, sa définition et son procédé de modélisation. Un ergorama particulier consiste à ne prendre que des points à l'infini. Pour le procédé de l'invention, on peut considérer des points à l'infini ou non. L'ergorama peut aussi être fonction de l'amétropie du porteur.

A l'aide de ces éléments, on peut définir une puissance et un astigmatisme, dans chaque direction du regard. Pour une direction du regard $(\alpha,\beta)$, on considère un point M objet à une distance objet donnée par l'ergorama. On détermine les points S et T entre lesquels se forme l'image de l'objet. La proximité image PI est alors donnée par

$$PI = \frac{1}{2}\left(\frac{1}{JT} + \frac{1}{JS}\right)$$

tandis que la proximité objet PO est l'inverse de la distance entre le point M et le point J de la sphère des sommets. La puissance est définie comme la somme des proximité objet et image, soit

$$P = PO + PI = \frac{1}{MJ} + \frac{1}{2}\left(\frac{1}{JT} + \frac{1}{JS}\right)$$

L'amplitude de l'astigmatisme est donnée par

$$A = \left|\frac{1}{JT} - \frac{1}{JS}\right|$$

L'angle de l'astigmatisme est l'angle $\gamma$ défini plus haut : il s'agit de l'angle mesuré dans un repère lié à l'oeil, par rapport à la direction $z_m$, avec lequel se forme l'image S, dans le plan $(z_m, y_m)$. Ces définitions de puissance et d'astigmatisme sont des définitions optiques, dans les conditions du porté et dans un repère lié à l'oeil. Qualitativement, la puissance et l'astigmatisme ainsi définis correspondent aux caractéristiques d'une lentille mince, qui placée à la place de la lentille dans la direction du regard, fournirait localement les mêmes images. On remarque que la définition fournit, dans la direction primaire du regard, la valeur classique de l'astigmatisme.

La puissance et l'astigmatisme ainsi définis peuvent être mesurés expérimentalement sur la lentille en utilisant un frontofocomètre; ils peuvent aussi être calculés par tracé de rayons dans les conditions du porté.

Pour se rapprocher des conventions utilisées par les ophtalmologistes lors d'une prescription, on peut également définir la puissance maximale de la lentille comme :

$$P_{max} = \frac{1}{MJ} + \frac{1}{JT}$$

et la puissance minimale comme :

$$P_{min} = \frac{1}{MJ} + \frac{1}{JS}$$

Les ophtalmologistes donnent les prescriptions de puissance et d'astigmatisme soit en fournissant :

- la valeur minimale de la puissance **$P_{min}$** et une valeur d'amplitude d'astigmatisme positive;
- la valeur maximale de la puissance **$P_{max}$** et une valeur d'amplitude d'astigmatisme négative.

Il est clair que les valeurs de l'angle de l'astigmatisme dans la prescription varient en fonction de la convention de prescription utilisée. Dans chacune des deux conventions, on donne l'angle que fait l'image, S ou T, correspondant à la puissance indiquée, avec l'axe $z_m$ mesuré dans le sens trigonométrique direct lorsqu'on regarde le porteur. On retrouve l'angle $\gamma$ et la convention dite « cylindre positif » lorsque la valeur d'amplitude d'astigmatisme est positive ; l'axe d'astigmatisme étant alors l'angle de la focale la moins puissante par rapport à un axe de référence horizontale.

L'invention propose, pour déterminer les caractéristiques d'une lentille ophtalmique progressive, de contrôler non seulement le module de l'astigmatisme résultant, mais également l'axe de l'astigmatisme résultant. Les caractéristiques de la lentille peuvent être déterminées par optimisation, comme décrit ci-dessous.

La lentille est placée devant l'oeil et l'astigmatisme introduit par la lentille est calculé dans les conditions du porté, par exemple par tracé de rayon. Si le porteur a reçu une prescription d'astigmatisme, cette prescription est soustraite vectoriellement pour fournir l'astigmatisme résultant de la lentille. Il est entendu que l'invention s'applique même lorsque la prescription ne comporte pas de correction d'astigmatisme puisque les lentilles progressives induisent un défaut d'astigmatisme dû à la progression de puissance. Néanmoins, dans le cas d'une prescription d'astigmatisme porteur, l'astigmatisme dit « utile » est soustrait vectoriellement pour permettre l'optimisation de l'astigmatisme résultant de la lentille. On considère donc pour l'optimisation de la lentille le module et axe de l'astigmatisme résultant pour un ergorama associant à chaque direction du regard un point de la lentille.

En particulier, le procédé de détermination d'une lentille selon l'invention propose de contrôler les valeurs d'axe de l'astigmatisme résultant dans au moins une zone de contrôle délimitée dans la zone de vision intermédiaire de la lentille ; et de préférence dans trois zones de contrôle concentriques délimitées dans la zone de vision intermédiaire de la lentille.

La lentille est décrite dans la suite en référence à un mode de réalisation adapté à des porteurs presbytes présentant une prescription de progression de puissance de 2 dioptries.

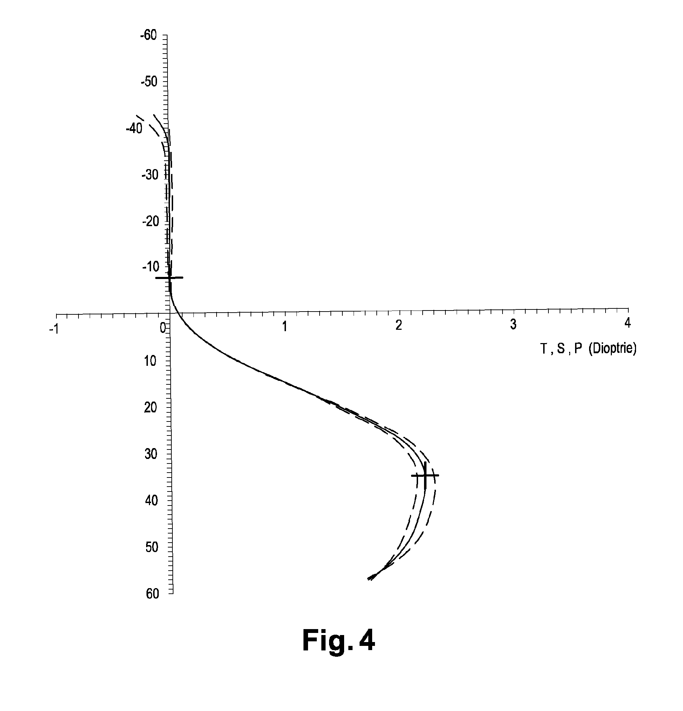

Les figures 4 à 6 montrent une lentille de diamètre 60 mm avec une face avant multifocale progressive et comportant un prisme de 1,15° de base géométrique orienté à 270° dans le repère TABO. Le plan du verre est incliné par rapport à la verticale de 8° et le verre présente une épaisseur de 1,9 mm. On a considéré une valeur de q' de 27 mm (telle que définie en référence à la figure 1) pour les mesures sur la lentille des figure 4 à 6.

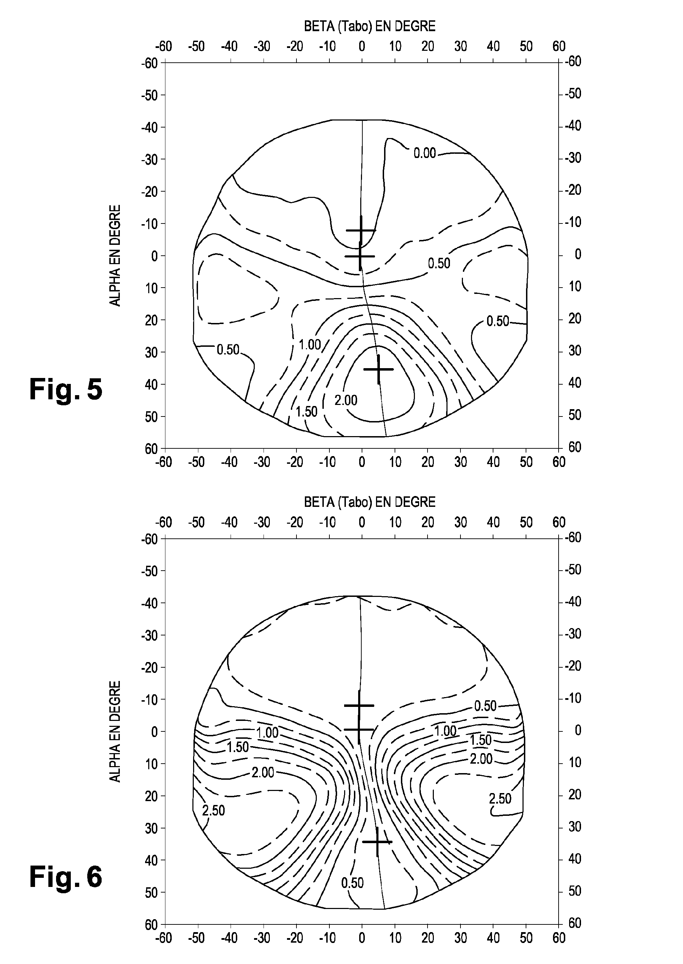

Sur les figures 5 et 6, on a représenté la lentille dans un repère en coordonnées sphériques, l'angle bêta étant porté en abscisse et l'angle alpha en ordonnée.

La lentille présente une ligne sensiblement ombilique, dite méridienne, sur laquelle l'astigmatisme est quasiment nul. La méridienne est confondue avec l'axe vertical en partie supérieure de la lentille et présente une inclinaison du côté nasal dans la partie inférieure de la lentille, la convergence étant plus marquée en vision de près.

Les figures montrent la méridienne ainsi que des repères sur la lentille. La croix de montage CM de la lentille peut être repérée géométriquement sur la lentille par une croix ou toute autre marque telle qu'un point entouré d'un cercle tracé sur la lentille, ou par tout autre moyen approprié; il s'agit d'un point de centrage matérialisé sur la lentille qui est utilisé par l'opticien pour le montage de la lentille dans la monture. En coordonnées sphériques, la croix de montage CM présente les coordonnées (0, 0) puisqu'elle correspond au point d'intersection de la face avant de la lentille avec la direction primaire du regard, comme définie précédemment. Le point de référence en vision de loin VL est situé sur la méridienne et correspond à une élévation de regard de 8° au dessus de la croix de montage ; le point de référence en vision de loin VL présente les coordonnées (0, -8°) dans le repère sphérique prédéfini. Le point de référence en vision de près VP est situé sur la méridienne et correspond à un abaissement du regard de 35° en dessous de la croix de montage ; le point de référence en vision de près VP présente les coordonnées (6°, 35°) dans le repère sphérique prédéfini.

La figure 4 montre un graphe de la puissance optique porteur le long de la méridienne; on a porté en ordonnées l'angle α et en abscisses la puissance en dioptries. On a reporté en pointillés les puissances optiques minimale et maximale correspondant respectivement aux quantités 1/JS et 1/JT définies précédemment, et en trait plein la puissance optique P telle que définie précédemment.

On peut noter sur la figure une puissance optique porteur sensiblement constante autour du point de référence en vision de loin VL, une puissance optique porteur sensiblement constante autour du point de référence en vision de près VP et une progression régulière de la puissance le long de la méridienne. Les valeurs sont décalées à zéro à l'origine, où la puissance optique vaut en réalité -0,05 dioptrie correspondant à une lentille plan en vision de loin prescrite pour des porteurs emmétropes presbytes.

La zone de vision intermédiaire commence généralement, pour une lentille multifocale progressive, au niveau de la croix de montage CM ; c'est là que commence la progression de puissance. Ainsi, la puissance optique augmente, depuis la croix de montage jusqu'au point de référence en vision de près VP, pour des valeurs de d'angle α de 0 à 35°. Pour les valeurs d'angle au-delà de 35°, la puissance optique redevient sensiblement constante, avec une valeur de 2,24 dioptries. On remarquera que la progression de puissance optique porteur (2,24 dioptries) est supérieure à l'addition de puissance A prescrite (2 dioptries). Cette différence de valeur de puissance est due aux effets obliques.

On peut définir sur une lentille une longueur de progression LP qui est la distance angulaire - ou la différence d'ordonnées - entre le centre optique de la lentille - ou la croix de montage CM - et un point de la méridienne sur lequel la progression de puissance atteint 85% de l'addition de puissance prescrite A. Dans l'exemple de la figure 4, une puissance optique de 0,85 x 2 dioptries, c'est-à-dire de 1,7 dioptries est atteinte pour un point de coordonnées angulaire α 23° environ.

La lentille selon l'invention présente ainsi une accessibilité aux puissances nécessaires à la vision de près avec un abaissement modéré du regard, inférieure ou égale à 25°. Cette accessibilité garantit une utilisation confortable de la zone de vision de près.

La figure 5 montre les lignes de niveau de la puissance optique porteur définie en une direction du regard et pour un point objet. Comme cela est habituel, on a porté à la figure 5, dans un repère en coordonnées sphériques, les lignes d'isopuissance; ces lignes sont formées des points présentant une même valeur de la puissance optique P. On a représenté les lignes d'isopuissance de 0 dioptrie à 2 dioptries.

On constate sur la figure 5, une zone de vision de loin s'étendant au dessus de la croix de montage, quasiment sans variation de puissance. La valeur de la puissance optique porteur est aussi sensiblement constante autour de la croix de montage CM. Cette variation de puissance quasi nulle autour de la croix de montage permet une certaine tolérance de positionnement lors du montage de la lentille dans l'équipement visuel.

La figure 6 montre les lignes de niveau de l'amplitude de l'astigmatisme oblique au porté ; c'est-à-dire le module de l'astigmatisme résultant. Comme cela est habituel, on a porté à la figure 6, dans un repère en coordonnées sphériques, les lignes d'iso astigmatisme; ces lignes sont formées des points présentant une même valeur de l'amplitude d'astigmatisme telle que définie précédemment. On a représenté les lignes d'isoastigmatisme de 0,25 dioptrie à 2,50 dioptries.

On constate que la zone de vision de loin est relativement dégagée : les lignes d'isoastigmatisme supérieures à 0,25 dioptrie s'ouvrent largement pour libérer le champ de vision de loin. On constate aussi que les lignes d'isoastigmatisme s'élargissent, dans la partie inférieure de la lentille, à la hauteur du point de référence pour la vision de près VP. Dans la partie inférieure de la lentille, les lignes d'isoastigmatisme 0,75 et 1 dioptrie sont quasiment parallèles et verticales et délimitent une zone contenant le point de référence en vision de près VP.

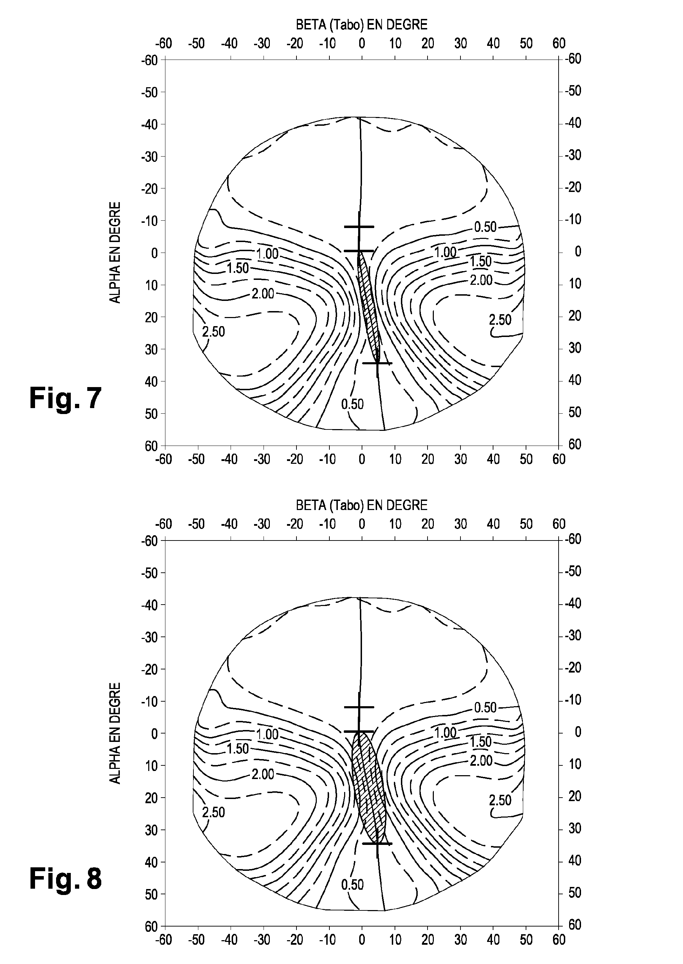

Les figures 7 à 9 reprennent la carte de module d'astigmatisme résultant de la figure 6. Sur ces figures 7 à 9, on a respectivement reporté trois différentes zones de contrôle de l'axe d'astigmatisme dans la zone de vision intermédiaire de la lentille.

Chaque zone de contrôle est définie par une ellipse centrée sur la méridienne à mi-hauteur entre la croix de montage CM et le point de référence en vision de près VP. Le grand axe de l'ellipse suit la méridienne ;

il est supérieur ou égal à 35°, de préférence compris entre 35° et 38°. L'ellipse englobe ainsi le point de centrage de la croix de montage CM et le point de référence en vision de près VP. Selon le mode de réalisation illustré sur les figures 7 à 9, le grand axe de chaque ellipse délimitant les trois zones de contrôle concentriques est égal à 36°.

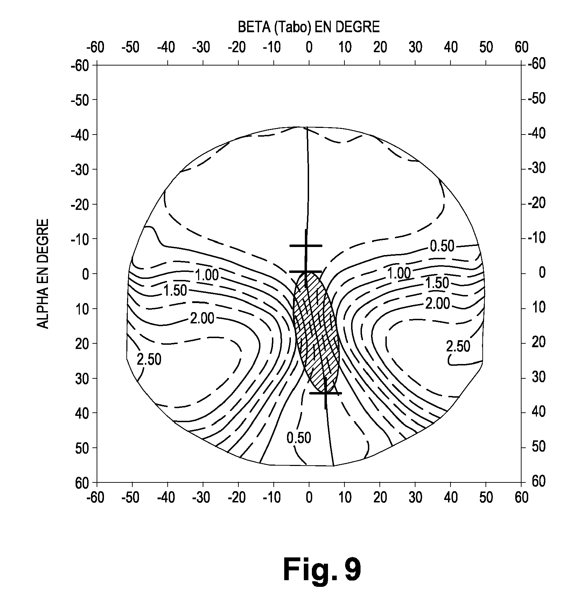

Le petit axe de l'ellipse varie entre les trois zones de contrôle représentées respectivement sur les figures 7 à 9. Une première zone de contrôle de l'axe d'astigmatisme, représentée sur le figure 7, est délimitée par une ellipse telle que définie précédemment dont le petit axe est compris entre 3,8° et 4,5°. Ce petit axe est égal à 4° sur l'exemple de la figure 7. Une deuxième zone de contrôle, représentée sur la figure 8, est délimitée par une ellipse telle que définie précédemment dont le petit axe est compris entre 7,5° et 8,5°. Ce petit axe est égal à 8° sur l'exemple de la figure 8. Une troisième zone de contrôle, représentée sur la figure 9, est délimitée par une ellipse telle que définie précédemment dont le petit axe est compris entre 11° et 13°. Ce petit axe est égal à 12° sur l'exemple de la figure 9.

Dans chacune de ces trois zones de contrôle, la moyenne de l'orientation des axes d'astigmatisme est sensiblement verticale, c'est-à-dire une valeur moyenne d'axe proche de 90° selon la convention adoptée précédemment. Dans la première zone de contrôle (figure 7), l'écart entre la moyenne des valeurs d'axe d'astigmatisme et la verticale (90°) est inférieur à 2,5 ° ; dans la deuxième zone de contrôle (figure 8), l'écart entre la moyenne des valeurs d'axe d'astigmatisme et la verticale est inférieur à 3° ; et dans la troisième zone de contrôle (figure 9), l'écart entre la moyenne des valeurs d'axe d'astigmatisme et la verticale est inférieur à 3,5°. A titre de comparaison, pour une lentille de l'art antérieur commercialisée par la demanderesse sous la marque Varilux Comfort®, l'orientation moyenne des axes d'astigmatisme présente un écart de d'environ 6° par rapport à la verticale dans la première zone de contrôle définie plus haut.

Pour procéder à l'optimisation d'une lentille selon l'invention, on considère comme lentille de départ une lentille présentant au moins une surface complexe. On considère la lentille dans les conditions du porté, par exemple avec les valeurs de distance q' de 27 mm, d'angle pantoscopique de 8°, et de galbe de 0°, comme proposé plus haut. On choisit une épaisseur de lentille au centre, par exemple une épaisseur de 1,9 mm, et un indice de verre, par exemple n = 1,665.

On fixe ensuite des cibles pour l'optimisation, ces cibles ayant des valeurs de puissance, de module d'astigmatisme et d'axe d'astigmatisme pour des directions de regard données. En particulier, on utilise comme cible au moins une valeur maximale d'écart de l'orientation moyenne des axes d'astigmatisme dans une première zone de contrôle délimitée par une ellipse telle que définie plus haut. On utilise aussi comme cible une variation de la puissance le long de la méridienne et en particulier une valeur de longueur de progression le long de la méridienne inférieure à 25°. On pourra aussi utiliser comme cible des valeurs maximales d'écart de l'orientation moyenne des axes d'astigmatisme dans les trois zones de contrôle délimitées par des ellipses telle que définies plus haut. Des cibles de module d'astigmatisme peuvent aussi être fixées dans un couloir autour de la méridienne et dans la zone de vision de loin.

Une fois les cibles définies, on détermine la lentille par optimisation. A cette fin, on considère une lentille courante; à l'initialisation, cette lentille courante est la lentille de départ. On fait varier les caractéristiques de la lentille courante pour s'approcher des valeurs cibles. Pour cette optimisation, on peut utiliser diverses représentations de la ou des surfaces qui varient. Dans l'exemple, on ne fait varier que la face arrière de la lentille, mais on pourrait aussi faire varier la face avant. La ou les faces qui varient peuvent être représentées par des polynômes de Zernike; on peut utiliser une nappe asphérique, superposée à l'une ou l'autre des faces, et faire varier cette nappe asphérique. L'optimisation peut utiliser les techniques connues en soi. En particulier, on pourra utiliser la méthode d'optimisation par moindres carrés amortis (DLS).

L'invention permet, pour des lentilles multifocales progressives, d'améliorer les performances des lentilles en vision intermédiaire.

**Revendications**

1. Procédé de détermination d'une lentille ophtalmique multifocale progressive comprenant les étapes de:

    - choix d'une lentille de départ présentant une croix de montage (CM) matérialisant la direction primaire du regard dans les conditions du porté et une méridienne de progression sensiblement ombilique présentant une addition de puissance (A) supérieure ou égale à 2 dioptries entre un point de référence en vision de loin (VL) et un point de référence en vision de près (VP) ;
    - définition d'une lentille courante égale à la lentille de départ ;
    - optimisation, dans les conditions du porté, de la lentille courante en utilisant comme cibles :
    - une longueur de progression inférieure ou égale à 25°, la longueur de progression étant définie comme l'angle d'abaissement du regard depuis la croix de montage (CM) jusqu'au point de la méridienne pour lequel la puissance optique porteur atteint 85% de la prescription d'addition (A) ; et
    - un écart entre l'orientation moyenne des axes d'astigmatisme résultant et la verticale inférieur à 2,5° dans une première zone de contrôle délimitée par une ellipse centrée sur la méridienne de progression à mi-hauteur entre la croix de montage (CM) et le point de référence en vision de près (VP), ladite ellipse présentant un grand axe supérieur à 35° et un petit axe compris entre 3,8° et 4,5°.

**2.** Le procédé de détermination d'une lentille ophtalmique de la revendication 1, comprenant en outre comme cible un écart entre l'orientation moyenne des axes d'astigmatisme résultant et la verticale inférieur à 3° dans une deuxième zone de contrôle délimitée par une ellipse centrée sur la méridienne de progression à mi-hauteur entre la croix de montage (CM) et le point de référence en vision de près (VP), ladite ellipse présentant un grand axe supérieur à 35° et un petit axe compris entre 7,5° et 8,5°.

**3.** Le procédé de détermination d'une lentille ophtalmique de la revendication 1 ou 2, comprenant en outre comme cible un écart entre l'orientation moyenne des axes d'astigmatisme résultant et la verticale inférieur à 3,5° dans une troisième zone de contrôle délimitée par une ellipse centrée sur la méridienne de progression à mi-hauteur entre la croix de montage (CM) et le point de référence en vision de près (VP), ladite ellipse présentant un grand axe supérieur à 35° et un petit axe compris entre 11° et 13°.

**4.** Le procédé de détermination d'une lentille ophtalmique de l'une des revendications 1 à 3, pour un porteur auquel une correction d'astigmatisme a été prescrite, pour lequel l'optimisation de la lentille courante comprend une étape consistant à soustraire vectoriellement l'astigmatisme prescrit à l'astigmatisme générée par la lentille dans les conditions du porté.

**5.** Lentille ophtalmique multifocale progressive présentant une surface complexe ayant :

   - une croix de montage (CM) matérialisant la direction primaire du regard dans les conditions du porté ;
   - une méridienne de progression sensiblement ombilique présentant une addition de puissance (A) supérieure ou égale à 2 dioptries entre un point de référence en vision de loin (VL) et un point de référence en vision de près (VP) ;
   la lentille présentant, dans les conditions du porté et ramenée à une prescription plan en vision de loin par ajustement des rayons de courbure d'au moins une de ses faces :
   - une longueur de progression (LP) inférieure ou égale à 25°, la longueur de progression étant définie comme l'angle d'abaissement du regard depuis la croix de montage (CM) jusqu'au point de la méridienne pour lequel la puissance optique porteur atteint 85% de la prescription d'addition (A),

   - un écart entre l'orientation moyenne des axes d'astigmatisme résultant et la verticale inférieur à 2,5° dans une première zone de contrôle délimitée par une ellipse centrée sur la méridienne de progression à mi-hauteur entre la croix de montage (CM) et le point de référence en vision de près (VP), ladite ellipse présentant un grand axe supérieur à 35° et un petit axe compris entre 3,8° et 4,5°.

**6.** La lentille de la revendication 5, présentant en outre, dans les conditions du porté et ramenée à une prescription plan en vision de loin par ajustement des rayons de courbure d'au moins une de ses faces, un écart entre l'orientation moyenne des axes d'astigmatisme résultant et la verticale inférieur à 3° dans une deuxième zone de contrôle délimitée par une ellipse centrée sur la méridienne de progression à mi-hauteur entre la croix de montage (CM) et le point de référence en vision de près (VP), ladite ellipse présentant un grand axe compris supérieur à 35° et un petit axe compris entre 7,5° et 8,5°.

**7.** La lentille de la revendication 5 ou 6, présentant en outre, dans les conditions du porté et ramenée à une prescription plan en vision de loin par ajustement des rayons de courbure d'au moins une de ses faces, un écart entre l'orientation moyenne des axes d'astigmatisme résultant et la verticale inférieur à 3,5° dans une troisième zone de contrôle délimitée par une ellipse centrée sur la méridienne de progression à mi-hauteur entre la croix de montage (CM) et le point de référence en vision de près (VP), ladite ellipse présentant un grand axe supérieur à 35° et un petit axe compris entre 11° et 13°.

**8.** La lentille de l'une des revendications 5 à 7, dans laquelle le grand axe de l'ellipse délimitant la zone de contrôle de l'orientation moyenne des axes d'astigmatisme résultant est compris entre 35° et 36°.

**9.** Un équipement visuel comportant au moins une lentille selon l'une des revendications 5 à 8.

**10.** Un procédé de correction de la vision d'un sujet presbyte, comprenant la fourniture au sujet ou le port par le sujet d'un équipement selon la revendication 9.

**Fig. 1**

**Fig. 2**

**Fig. 3**

**Fig. 4**

Fig. 5

Fig. 6

Fig. 7

Fig. 8

Fig. 9

**EP 2 302 442 A1**

Europäisches Patentamt
European Patent Office
Office européen des brevets

# RAPPORT DE RECHERCHE EUROPEENNE

Numéro de la demande

EP 10 18 0443

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 103 45 214 A1 (RODENSTOCK GMBH) 28 avril 2005 (2005-04-28) | 5-10 | INV. G02C7/02 |
| A | * alinéa [0002] * * alinéa [0116] - alinéa [0122]; figures 4A,4B,4C * | 1-4 | |
| X | US 4 606 626 A (SHINOHARA ET AL) 19 août 1986 (1986-08-19) | 5-10 | |
| A | * colonne 5, ligne 12 - colonne 7, ligne 24; figures 4-7 * | 1-4 | |
| A | US 4 055 379 A (WINTHROP ET AL) 25 octobre 1977 (1977-10-25) * colonne 7, ligne 38 - colonne 8, ligne 30 * * colonne 13, ligne 55 - colonne 14, ligne 22; figures 12,13 * | 1-10 | |
| A | STEFANIE SCHULDT: "ysis - Natürliches sehen erleben", DOZ, no. 5/2004, mai 2004 (2004-05), pages 38-43, XP002398937, DOZ-Verlag * le document en entier * | 1-4 | DOMAINES TECHNIQUES RECHERCHES (IPC)<br><br>G02C |
| A | MINKWITZ G: "ERGAENZENDE BEMERKUNGEN ZUM SO GENANNTEN SATZ VON MINKWITZ", DEUTSCHE OPTIKERZEITUNG, OPT. FACHVEROEFF., HEIDELBERG, DE, septembre 2005 (2005-09), pages 44-48, XP001233868, ISSN: 0344-7103 * le document en entier * | 1-10 | |

-/--

Le présent rapport a été établi pour toutes les revendications

| Lieu de la recherche | Date d'achèvement de la recherche | Examinateur |
|---|---|---|
| Munich | 27 janvier 2011 | Bratfisch, Knut |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 10 18 0443

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GUILINO G H: "DESIGN PHILOSOPHY FOR PROGRESSIVE ADDITION LENSES", APPLIED OPTICS, OSA, OPTICAL SOCIETY OF AMERICA, WASHINGTON, DC, US, vol. 32, no. 1, janvier 1993 (1993-01), pages 111-117, XP000331309, ISSN: 0003-6935 * le document en entier * ----- | 1-10 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 27 janvier 2011 | Bratfisch, Knut |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 10 18 0443

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-01-2011

| Document brevet cité au rapport de recherche | | Date de publication | Membre(s) de la famille de brevet(s) | | Date de publication |
|---|---|---|---|---|---|
| DE 10345214 | A1 | 28-04-2005 | EP | 1676167 A1 | 05-07-2006 |
| | | | WO | 2005036238 A1 | 21-04-2005 |
| | | | JP | 4531761 B2 | 25-08-2010 |
| | | | JP | 2007506995 T | 22-03-2007 |
| | | | US | 2007035696 A1 | 15-02-2007 |
| US 4606626 | A | 19-08-1986 | DE | 3345076 A1 | 09-08-1984 |
| | | | FR | 2545615 A1 | 09-11-1984 |
| US 4055379 | A | 25-10-1977 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- FR 2683642 A
- FR 2704327 A
- EP 0990939 A
- WO A A
- WO 9812590 A
- FR 2753805 A
- US 6318859 A

**Littérature non-brevet citée dans la description**

- **CHARMAN.** Astigmatism, accomodation and visual intrumentation. *Applied Optics,* 1978, vol. 17 (24), 3903-3910
- **LEGRAND.** Optique Physiologique. 1965